(19) Europäisches Patentamt
European Patent Office
Office européen des brevets

(11) **EP 1 770 426 B1**

(12) **FASCICULE DE BREVET EUROPEEN**

(45) Date de publication et mention
de la délivrance du brevet:
**17.02.2010 Bulletin 2010/07**

(51) Int Cl.:
*G02B 21/00* (2006.01)     *G02B 5/00* (2006.01)

(21) Numéro de dépôt: **06026140.1**

(22) Date de dépôt: **09.04.2002**

(54) **Ensemble modifiable de trous microscopiques**

Veränderbare Anordnung von mikroskopischen Löchern

Modifiable assembly of microscopic apertures

(84) Etats contractants désignés:
**AT BE CH CY DE DK ES FI FR GB GR IE IT LI LU MC NL PT SE TR**

(30) Priorité: **10.04.2001 FR 0104841**
**21.01.2002 FR 0200780**

(43) Date de publication de la demande:
**04.04.2007 Bulletin 2007/14**

(62) Numéro(s) de document de la (des) demande(s) initiale(s) en application de l'article 76 CBE:
**02724407.8 / 1 417 526**

(73) Titulaire: **Lauer, Vincent**
**68200 Mulhouse (FR)**

(72) Inventeur: **Lauer, Vincent**
**68200 Mulhouse (FR)**

(56) Documents cités:
**DE-A- 19 513 350     DE-A- 19 807 716**
**DE-C- 19 929 958**

- **PATENT ABSTRACTS OF JAPAN vol. 017, no. 653 (E-1469), 3 décembre 1993 (1993-12-03) & JP 05 217536 A (HITACHI LTD), 27 août 1993 (1993-08-27)**
- **PATENT ABSTRACTS OF JAPAN vol. 1998, no. 02, 30 janvier 1998 (1998-01-30) -& JP 09 265049 A (DAINIPPON SCREEN MFG CO LTD), 7 octobre 1997 (1997-10-07)**
- **SASAKI K ET AL: "THREE-DIMENSIONAL SPACE- AND TIME-RESOLVED FLUORESCENCE SPECTROSCOPY" APPLIED SPECTROSCOPY, THE SOCIETY FOR APPLIED SPECTROSCOPY. BALTIMORE, US, vol. 45, no. 6, 1 juillet 1991 (1991-07-01), pages 1041-1045, XP000216457 ISSN: 0003-7028**
- **PATENT ABSTRACTS OF JAPAN vol. 2000, no. 09, 13 octobre 2000 (2000-10-13) -& JP 2000 180606 A (FUJI XEROX CO LTD), 30 juin 2000 (2000-06-30)**

## Description

### Domaine technique

L'invention concerne un trou microscopique ou un ensemble de trous microscopiques ( en anglais "pinhole" ), le nombre de ces trous et/ou leur taille pouvant être aisément modifié. Un tel ensemble de trous microscopiques est destiné à être utilisé pour diverses applications en optique, et en particulier en microscopie confocale.

### Technique antérieure.

En microscopie confocale on utilise usuellement deux types de trous microscopiques:

- des trous de taille fixe: pour modifier la taille d'un trou, il est nécessaire de le remplacer par un autre. Typiquement plusieurs trous microscopiques peuvent être montés sur une roue ayant une position correspondant à l'utilisation de chacun de ces trous. Le mouvement de la roue doit être très précis.
- des trous de taille variable: fonctionnant sur le principe du diaphragme à iris, ils nécessitent au moins trois lames qui forment un trou en se croisant et sont coûteux du fait de la relative complexité du mécanisme.

Classiquement, les systèmes de microscopie confocale nécessitent l'utilisation d'un seul trou microscopique. Par exemple le premier mode de réalisation de la demande de brevet français numéro 0103860 du 22 mars 2001, ainsi que le microscope décrit sur la figure 3 du brevet US 5,978,095 ou le microscope décrit dans la demande de brevet US 5,162,941.

D'autres systèmes de microscopie confocale nécessitent l'utilisation d'un réseau de trous microscopiques. Par exemple les microscopes décrits par la figure 1 du brevet numéro US 5,239,178 ou la figure 3 du brevet US 5,978,095, ou les systèmes à disque de Nipkow.

Dans certains modes de réalisation d'un microscope tel que celui décrit dans la demande de brevet français numéro 0103860 du 22 mars 2001, un réseau de trous microscopiques doit être positionné avec une grande précision, ce qui est difficile en utilisant une technique simple consistant à échanger l'ensemble du réseau. Lorsque des trous microscopiques « uniques » sont simplement échangés comme sur certains microscopes confocaux monopoint, leur positionnement précis est également difficile. De plus les systèmes d'échange de réseaux de trous microscopiques sont nécessairement encombrants, puisque leur encombrement est la somme des encombrements de chaque réseau pouvant être échangé.

Dans le cas des microscopes utilisant un réseau de trous microscopiques la taille et la densité des trous ne peuvent usuellement pas être modifiés. Pourtant cette modification est souhaitable pour adapter la taille des trous à la longueur d'onde étudiée. Le brevet numéro US 6,002,509 apporte une solution à ce problème dans le cas d'un microscope à disque de Nipkow. Toutefois cette solution nécessite le remplacement du réseau de trous par un réseau de points réfléchissants. Quand la technique utilisée consiste à utiliser des points réfléchissants réalisés par un traitement multicouches, chaque longueur d'onde correspond à une taille et une densité donnés des points réfléchissants. Il n'est alors pas possible de modifier la taille ou la densité des trous du trou à longueur d'onde donnée, et le nombre de tailles de trous différentes est limité par les performances du traitement multicouches.Quand la technique utilisée consiste à introduire plusieurs couronnes concentriques sur le disque de Nipkow, un déplacement du disque, peu pratique, est nécessaire, et l'encombrement du disque devient rapidement excessif. La technique est difficilement adaptable à des systèmes utilisant un réseau fixe de trous microscopiques.

Le brevet allemand DE 199 29 58 C1 décrit un ensemble modifiable comprenant une pluralité de trous modifiables, caractérisé par les faits suivants :

- il comprend une pluralité de plaques comprenant chacune une pluralité de trous intermédiaires,
- chaque trou modifiable résulte de la superposition de trous intermédiaires de chacune dedites plaques,
- chaque trou intermédiaire contribue à la formation d'au plus un trou modifiable,
- au moins une dedites plaques est adaptée pour se déplacer, pour passer d'une première configuration à une seconde configuration,
- chaque trous modifiable résulte de la superposition des mêmes trous inrtermédiaires dans la seconde configuration que dans la première configuration, et
- la taille des trous microscopiques dans la seconde configuration diffère de leur taille dans la première configuration.

Toutefois ces trous ne sont pas de taille microscopique (leur taille est typiquement comprise entre 0,5 mm at 4 mm alors qu'une taille typique est de 50 microns pour le filtrage d'un faisceau lumineux dans un microscope confocal) et l'ensemble n'est donc pas adapté pour filtrer un faisceau lumineux dans un microscope confocal. Cet ensemble vise à la réalisation de lunettes et non d'un microscope confocal.

Le brevet US 5,400,170 décrit un trou microscopique unique modifiable adapté pour filtrer un faisceau lumineux dans un microscope confocal , caractérisé par les faits suivants :

- il comprend une pluralité de plaques,
- le trou microscopique résulte de la superposition de coins rentrants découpés dans chacune desdites plaques,
- chaque coin contribue à la formation du un trou microscopique,

- au moins une dedites plaques est adaptée pour se déplacer, pour passer d'une première configuration à une seconde configuration,
- le trou microscopique résulte de la superposition des mêmes coins rentrants dans la seconde configuration que dans la première configuration, et
- la taille du trou microscopique dans la seconde configuration diffère de sa taille dans la première configuration.

Toutefois les coins ne sont pas des trous puisque il s'agit de coins entrants ouverts d'un coté. De plus le trou microscopique est ici unique et donc non adapté à un microscope confocal multipoints.

## Description de l'invention

L'invention a pour objet un ensemble de plusieurs trous microscopiques de taille variable, dont les modifications sont obtenues par une méthode simplifiée, précise et peu coûteuse. En particulier, un objet de l'invention est de réaliser un trous microscopiques modifiable sans problèmes de positionnement et d'un encombrement réduit. Par "trous" on entend trous au sens optique du terme, c'est-à-dire petites zones traversables par la lumière, non nécessairement vides. Un "trou" peut être par exemple une interruption de couche opaque déposée sur du verre.

A cet effet, l'invention a pour objet un ensemble modifiable comprenant une pluralité de trous microscopiques et adapté pour filtrer un faisceau lumineux dans un microscope confocal, caractérisé par les faits suivants :

- il comprend une pluralité de plaques comprenant chacune une pluralité de trous intermédiaires,
- chaque trou microscopique résulte de la superposition de trous intermédiaires de chacune dedites plaques,
- chaque trou intermédiaire contribue à la formation d'au plus un trou microscopique,
- au moins une dedites plaques est adaptée pour se déplacer, pour passer d'une première configuration à une seconde configuration,
- chaque trous microscopique résulte de la superposition des mêmes trous intermédiaires dans la seconde configuration que dans la première configuration, et
- la taille des trous microscopiques dans la seconde configuration diffère de leur taille dans la première configuration.

Un diaphragme iris comporte également des plaques glissant les unes par rapport aux autres. L'invention s'en distingue par le fait que ces plaques portent des trous microscopiques, et par le fait qu'une des plaques porte au moins deux trous microscopiques. Cette disposition particulière permet de simplifier la réalisation du système et rend possible la réalisation de réseaux de trous microscopiques modifiables, alors que les diaphragmes à iris ne sont conçus que pour un trou microscopique modifiable unique.

Un ensemble modifiable de trous microscopiques peut également être obtenu par un système échangeant physiquement deux ensembles de trous microscopiques réalisés sur des plaques différentes. Cette solution est utilisée dans certains microscopes confocaux monopoint. La présente invention se distingue de cette solution technique simple par l'utilisation de plusieurs plaques superposées, ce qui permet de modifier le réseau de trous microscopiques au moyen de déplacements également microscopiques, et non macroscopiques comme c'est le cas dans l'état de l'art. Ceci simplifie les problèmes de positionnement.

Différentes techniques de réalisation des plaques peuvent être employées. Par exemple, et suivant une caractéristique de l'invention, deux desdites plaques peuvent être des vitres transparentes sur lesquelles lesdits trous microscopiques sont réalisées par dépôt d'une couche opaque par une méthode litographique. Les couches opaques de ces deux plaques peuvent alors être tournées l'une vers l'autre, pour que l'espace les séparant soit aussi réduit que possible. L'avantage de cette technique est que les vitres ont une bonne rigidité (se déforment peu).

Suivant une caractéristique de l'invention, au moins une des plaques est une feuille opaque fine dans laquelle lesdits trous microscopiques sont obtenus par perçage. Cette solution s'impose lorsque plus de deux plaques sont utilisées. En effet, si on utilise uniquement des plaques en verre, leur épaisseur ne permet pas la réalisation dans de bonnes conditions d'un réseau de trous.

Suivant une caractéristique de l'invention, les plaques constituées de feuilles opaques fines sont placées les unes contre les autres et serrées entre deux plaques épaisses, pour éviter une déformation desdites plaques constituées de feuilles opaques fines. En effet une difficulté de réalisation est la tendance à la déformation des feuilles fines, qui n'ont pas la rigidité nécessaire et doivent donc être placées entre des supports plus épais.

Suivant une caractéristique de l'invention, les plaques sont séparées les unes des autres par des couches d'un liquide lubrifiant transparent. En effet, dans le cas contraire, les frottements entre les plaques rendent difficile un fonctionnement correct. Une autre solution est d'utiliser des plaques qui ne se touchent pas les unes les autres, mais cette solution est difficile car elle nécessite une excellente planéité des plaques. Le glissement d'une plaque l'une par rapport à une autre peut en général se faire suivant deux axes. Toutefois, le système est simplifié, selon une caractéristique de l'invention, si ce glissement se fait suivant seulement un axe. Dans ce cas, il est possible d'utiliser un rail de guidage pour faciliter le maintien d'un positionnement relatif correct des plaques. Toutefois un tel rail est coûteux et pose des problèmes de positionnement. Pour faciliter le positionnement relatif des plaques, et selon une caractéristique de l'invention, deux plaques adjacentes glissant l'une par rapport à l'autre suivant un axe sont positionnées l'une par rapport à l'autre par des rails de guidage microscopiques. Un rail microscopique étant fragile, il est préférable, suivant une caractéristique de l'invention, d'utiliser plusieurs rails de guidage microscopiques. Ces rails peuvent par exemple être réalisés par litographie.

Différentes solutions peuvent être utilisées pour l'agencement des plaques et la répartition des trous sur les plaques.

Selon une caractéristique de l'invention, une solution appropriée à ce problème consiste à déplacer continument les plaques les unes par rapport aux autres, pour que ce déplacement continu se traduise par une modification continue de la surface de chaque trou microscopique de l'ensemble modifiable. On peut par exemple utiliser plusieurs plaques identiques et une position de référence pour laquelle les trous microscopiques desdites plusieurs plaques sont exactement superposés les uns aux autres. Pour que la diminution de taille des trous microscopiques se fasse régulièrement, il est préférable de générer un déplacement en translation de la i-ième plaque suivant une direction orientée à $\frac{2\pi}{N}$

radians dans un repère de référence commun aux $N$ plaques constituant l'ensemble de trous microscopiques. Dans le cas ou $N$ plaques sont utilisées, les trous microscopiques sont de préférence des polygones à $2N$ cotés, bien qu'ils puissent également avoir d'autres formes, par exemple circulaires. Les directions du déplacement en translation des plaques les unes par rapport aux autres sont alors dirigées de préférence suivant des médiatrices des polygones.

Suivant une caractéristique de l'invention, le glissement des plaques les unes par rapport aux autres est obtenu à l'aide d'un mécanisme de diaphragme à iris. Cette solution est bien adaptée au cas précédent, ou elle permet de coordonner le déplacement continu de plusieurs plaques. Ce mécanisme de diaphragme à iris peut, dans le cas ou une rotation de l'ensemble de trous microscopiques doit être évitée, être complété par un dispositif de rotation supplémentaire permettant de compenser la rotation engendrée par un mécanisme de diaphragme à iris à un seul élément mobile.

Suivant une caractéristique de l'invention, une des plaques est déplacée au moyen d'un positionneur linéaire en axe. Cette solution est préférée lorsque une technique à base de déplacements discrets est utilisée. Il peut également être nécessaire de déplacer une des plaques au moyen d'un positionneur deux axes. Cette solution est celle qui permet le maximum de flexibilité.

Lorsque la densité de trous microscopiques recherchée est faible, et selon une caractéristique de l'invention, l'ensemble modifiable de trous microscopiques peut aisément être réalisé au moyen de deux plaques seulement. Dans ce cas il peut s'agir de plaques transparentes épaisses sur lesquels les réseaux de trous sont réalisés par une méthode litographique. Cette solution est la plus simple, en particulier du fait que les plaques ne se déforment pas. Toutefois, lorsque la densité de trous microscopiques est élevée, il devient nécessaire d'utiliser plus de deux plaques ainsi qu'on l'a vu plus haut.

## Description rapide des figures.

La figure 1 représente une plaque utilisée dans un premier mode de réalisation.

La figure 2 représente un dispositif utilisé pour éviter des fuites du liquide séparant les plaques, le dispositif étant rempli sous vide. La figure 3 représente un dispositif similaire mais comportant un trop-plein ayant une prise d'air.

La figure 4 représente une plaque utilisée dans un second mode de réalisation. La figure 5 illustre le déplacement de 3 plaques dans ce mode de réalisation. La figure 6 montre une plaque supplémentaire utilisée dans ce mode de réalisation. La figure 7 montre en vue de face le dispositif d'entraînement de 3 plaques identiques sur le principe de la figure 5. La figure 8 montre ce dispositif en coupe, complété par une quatrième plaque.

La figure 9 représente en coupe l'assemblage de deux plaques réalisées sur des feuilles métalliques.

## Premier mode de réalisation.

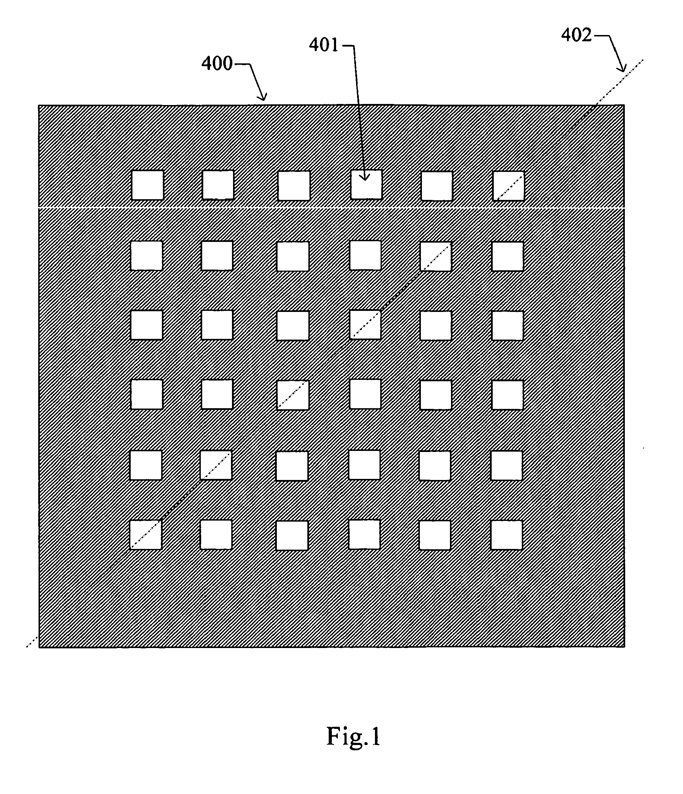

Ce premier mode de réalisation permet l'obtention de trous carrés de taille continûment variable. Il utilise deux plaques identiques et représentées par exemple par la figure 1. Lorsque le trou 401 de la première plaque est exactement superposé au trou 401 de la deuxième plaque on obtient un ensemble de trous carrés équivalent à première plaque seule. Lorsque les deux plaques sont déplacées l'une par rapport à l'autre suivant l'axe 402, la taille des trous carrés résultant de la superposition des plaques est diminuée.

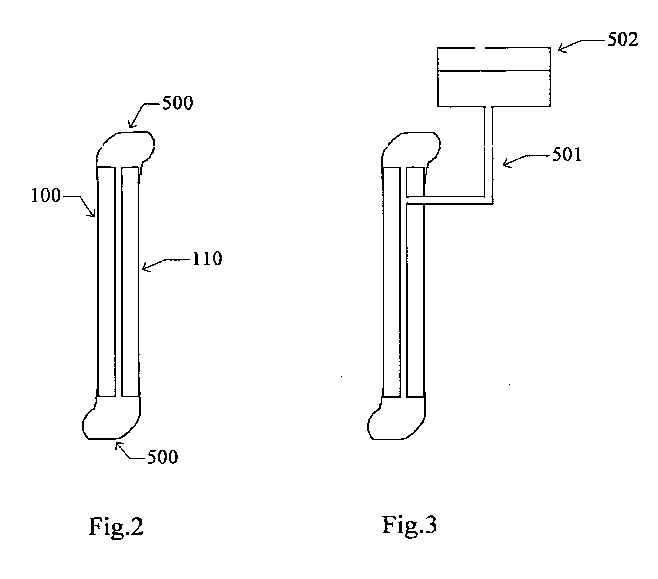

Les deux plaques se déplaçant l'une par rapport à l'autre peuvent être séparées par une couche de liquide optique. Le système peut être rendu étanche comme indiqué sur la figure 2 au moyen d'une fermeture souple 500, par exemple en plastique, qui ferme l'ensemble du système. Le liquide peut alors être injecté sous vide entre les deux plaques et dans la zone comprise à l'intérieur de la fermeture souple 500. Ce dispositif permet de concilier le mouvement des plaques 110 et 100 avec l'absence de fuites de liquide. Une alternative au remplissage sous vide est le système de trop-plein représenté sur la figure 15. Un tube 501 mène dans un réservoir 502 doté d'une prise d'air et surélevé et assure le maintien d'un niveau de liquide optique dans la zone comprise entre les plaques.

### Second mode de réalisation.

Ce second mode de réalisation est particulièrement adapté au cas ou une densité élevée de trous microscopiques est recherchée. Bien qu'étant plus complexe que le premier mode de réalisation il permet la réalisation de trous microscopiques hexagonaux, ce qui est préférable à des trous microscopiques carrés. Dans une version de base, il nécessite l'utilisation de 3 plaques qui se déplacent continument les unes par rapport aux autres. Elles sont entraînées au moyen d'un dispositif de diaphragme à iris modifié pour compenser la rotation de l'ensemble. Les trous microscopiques sont hexagonaux.

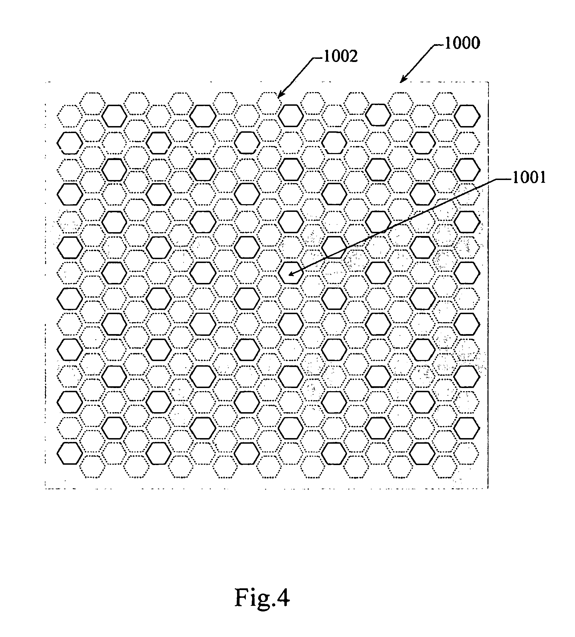

Les trois plaques portent des réseaux de trous identiques qui, dans une position de référence, sont superposés les uns aux autres. La figure 4 montre une plaque 1000 comportant des trous microscopiques, par exemple 1001. Les pointillés, par exemple 1002, délimitent des emplacements hexagonaux ne portant pas de trou. Dans la position de référence, l'allure de l'ensemble modifiable de trous microscopiques est la même que l'allure de chacune des plaques et est donc représentée par la figure 4.

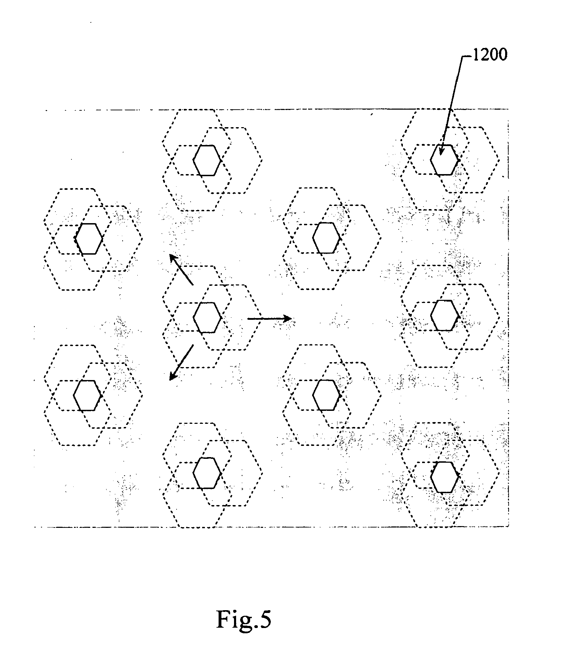

La taille des trous de l'ensemble modifiable de trous microscopiques est modifiée en déplaçant les plaques les unes par rapport aux autres de la manière indiquée par la figure 5. Cette figure représente une partie du réseau de trous microscopiques. Sur la figure, les pointillés représentent les limites des trous microscopiques de chacune des trois plaques et on a représenté en blanc (par exemple 1200) l'intersection de ces trous, qui constitue le trou effectif du réseau modifiable. Les flèches montrent la direction du déplacement des plaques à partir de la position de référence. En déplaçant les plaques dans le sens des flèches on diminue continûment la largeur des trous. La forme des trous de l'ensemble modifiable de trous microscopiques n'est pas modifiée lorsque leur largeur diminue. Ceci est dû au fait qu'il y a 3 plaques, que les trous ont 2x3=6 cotés, et que les directions du déplacement sont suivant des médiatrices des hexagones.

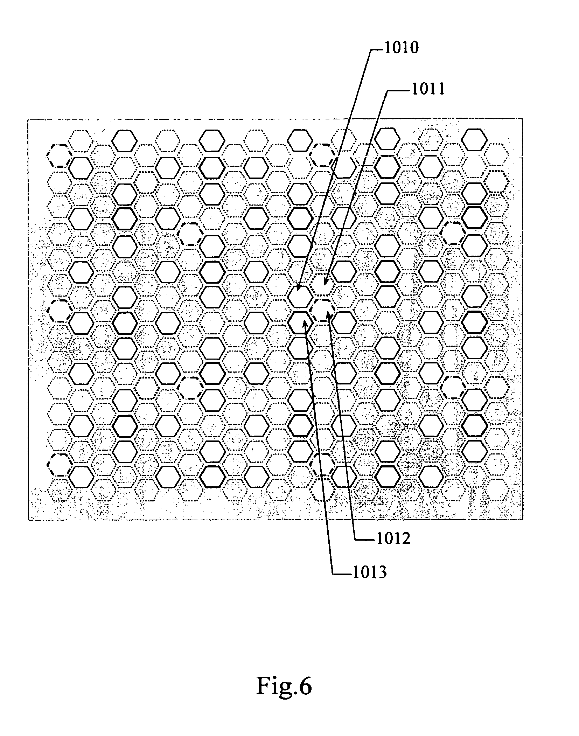

Dans une version permettant de modifier également la densité de trous microscopiques, une quatrième plaque est nécessaire. Cette plaque est représentée sur la figure 6. L'ensemble de trous microscopiques modifiable obtenu à l'aide de trois plaques et représenté sur la figure 4 en position de référence constitue un premier ensemble intermédiaire. La plaque de la figure 6 constitue un second ensemble intermédiaire. Lorsque le trou 1010 de la plaque de la figure 6 est superposé au trou 1001 du premier ensemble intermédiaire de la figure 4, la densité de trous microscopiques est maximale. Lorsque le trou 1013 de la plaque de la figure 6 est superposé au trou 1001 du premier ensemble intermédiaire de la figure 4, le nombre de trous microscopiques par unité de surface est divisé par 4. Lorsque le trou 1012 de la plaque de la figure 15 est superposé au trou 1001 du premier ensemble intermédiaire de la figure 4, le nombre de trous microscopiques par unité de surface est divisé par 9. Lorsque le trou 1011 de la plaque de la figure 15 est superposé au trou 1001 du premier ensemble intermédiaire de la figure 4, le nombre de trous microscopiques par unité de surface est divisé par 16.

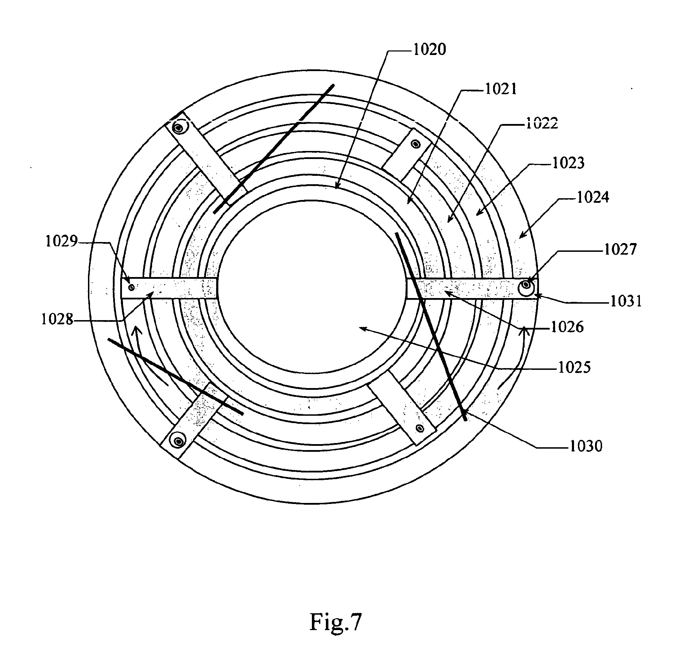

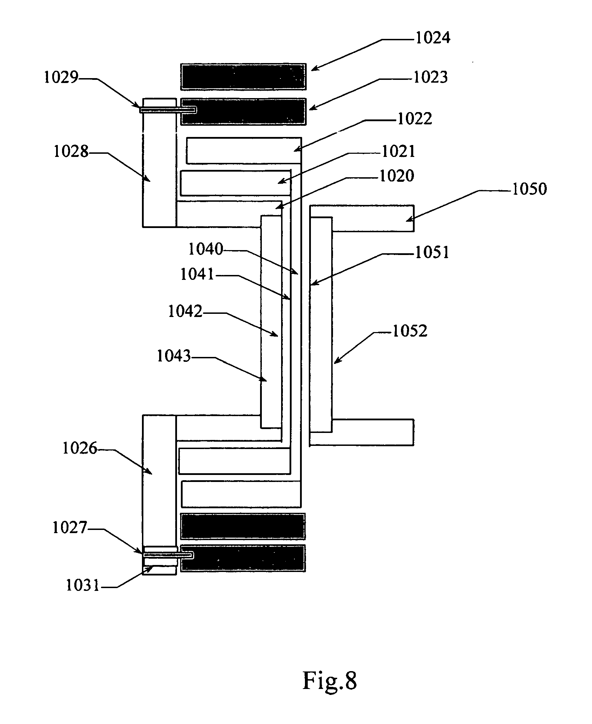

L'entraînement des trois plaques identiques représentées figure 4 peut se faire au moyen d'un système d'enraînement de diaphragme à iris représenté sur les figures 7 et 8. Les plaques de la figure 4 sont les plaques 1040, 1041, 1042 représentées sur la figure 8. Ces plaques sont des feuilles métalliques tendues sur des bagues de maintien circulaires 1022, 1021, 1020 et portant des trous réalisés par exemple par perçage au laser. Ces trois bagues de fixation sont reliées à deux bagues de commande 1023, 1024. Par exemple, la bague interne 1020 est reliée à la bague de commande 1023 par une barre 1028 tournant librement autour d'un axe 1029 fixé dans la bague de commande 1023. La bague interne 1020 est reliée à la bague de commande 1024 par une barre 1026 tournant librement autour d'un axe 1027 fixé dans la bague de commande 1024. Le logement 1031 de l'axe 1027 est surdimensionné de manière à pouvoir conjuguer une rotation et une translation par rapport à l'axe 1027. Un tirant 1030 est utilisé pour maintenir le logement 1031 en butée sur l'axe 1027. Les deux autres bagues de maintien sont liées de manière similaire aux bagues de commande. Lorsque les deux bagues de commande tournent simultanément en sens opposé et d'un angle égal, les trois plaques se déplacent en translation avec un angle de 120 degrés entre les directions de chaque axe de déplacement, comme indiqué sur la figure 5.

La figure 8 représente également la quatrième plaque 1051 qui est une feuille tendue sur une bague de maintien 1050. La bague de maintien 1050 est montée sur un positionneur deux axes.

Les plaques 1051 et 1042 sont elles-mêmes plaquées sur des plaques de verre épaisses 1052 et 1043. Lorsque l'ensemble du système est en position les deux plaques de verre 1052 et 1043 évitent des déformations des feuilles (plaques) 1042,1041,1040,1051 portant des trous microscopiques.

### Méthode de guidage et de positionnement des plaques

Les plaques portant des trous microscopiques se déplacent généralement en translation les unes par rapport aux autres suivant un axe unique. Par exemple dans ie premier mode de réalisation, le deuxième, le quatrième mode de réalisation, mais également dans le cinquième mode de réalisation en ce qui concerne les trois plaques se déplaçant au moyen d'un mécanisme de diaphragme à iris. Cette solution simplifie le système en ce chaque plaque se déplace par rapport à une autre suivant un axe unique. Ainsi qu'indiqué plus haut un rail de guidage peut être utilisé pour guider les plaques. Toutefois, un rail de guidage macroscopique est difficile à réaliser avec la précision requise. Afin d'obtenir un bon positionnement des plaques on peut remplaçer un tel rail de guidage par un ensemble de rails de guidage microscopiques. Des exemples de réalisation des rails de guidage sont décrits dans la demande de brevet PCT/FR02/01222.

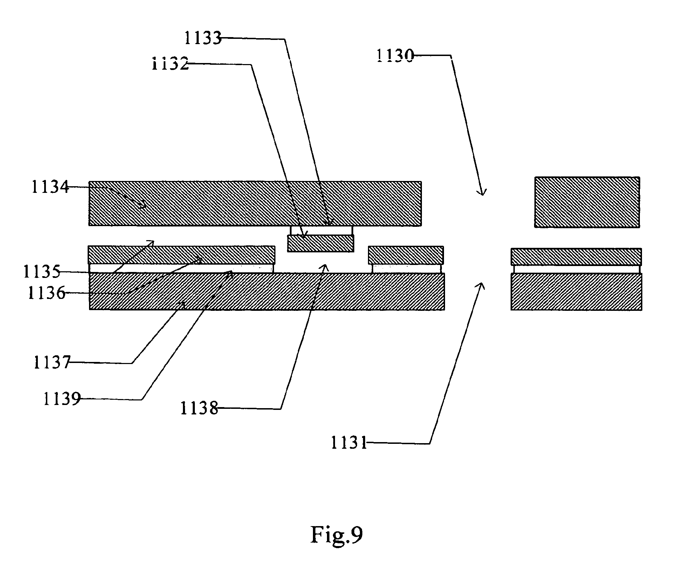

Cette méthode de guidage peut être adaptée au cas ou les plaques sont des feuilles métalliques, comme dans le second mode de réalisation. Dans ce cas des rails mâle ou femelle peuvent être réalisés de chaque coté de chaque feuille. Les plaques en verre sont alors remplaçées par les feuilles métalliques. Le schéma de la figure 9 est équivalent à celui de la figure 14 de la demande PCT/FR02/01222 mais illustre le cas de plaques constituées par de fines feuilles métalliques. La plaque 1134 porte le rail mâle 1132 séparé de la plaque par une couche de résine protectrice 1133 utilisée pour la réalisation par litographie du rail 1132. La plaque 1137 porte le rail femelle 1138 réalisé par litographie dans une couche métallique 1135 séparée de la plaque par une résine 1139. L'espace entre les deux plaques est rempli d'un liquide lubrifiant. On n'a représenté de rail de guidage que d'un coté de chaque plaque mais il est possible d'en réaliser de chaque coté de chaque plaque. Dans le cas du second mode de réalisation, les rails de guidage qui séparent chaque feuille métallique guidée des deux feuilles adjacentes participent au maintien de la forme des feuilles métallique et à l'évitement des déformations. Bien entendu la feuille numéro 1051 de la figure 17 ne peut être guidée par cette méthode que si son mouvement est restreint à une seule direction.

## Applications industrielles

Le présent ensemble de trous microscopiques peut être utilisé dans un microscope confocal à éclairage multipoint. Par exemple si un ensemble de trous microscopiques du type décrit dans le quatrième mode de réalisation remplace l'ensemble de trous microscopiques utilisé dans le système décrit par la figure 1 du brevet numéro US 5,239,178 il devient possible de modifier la taille de ces trous microscopiques. De même, le réseau de trous microscopiques du premier mode de réalisation de la présente invention peut remplacer, avec le même effet, le réseau de trous microscopiques utilisé sur la figure 3 du brevet US 5,978,095. En utilisant un réseau modifiable de trous microscopiques suivant la présente invention dans le microscope décrit par un des deux premiers modes de réalisation de la demande de brevet français numéro 0103860 du 22 mars 2001, on peut aisément modifier le diamètre des trous microscopiques , ce qui affecte le compromis vitesse/résolution ou vitesse/profondeur de pénétration dans l'échantillon.

## Revendications

1. ensemble modifiable comprenant une pluralité de trous microscopiques (1200) et adapté pour filtrer un faisceau lumineux dans un microscope confocal, **caractérisé par** les faits suivants :

   - il comprend une pluralité de plaques(1000) comprenant chacune une pluralité de trous intermédiaires (1001),
   - chaque trou microscopique résulte de la superposition de trous intermédiaires de chacune dedites plaques,
   - chaque trou intermédiaire contribue à la formation d'au plus un trou microscopique,
   - au moins une dedites plaques est adaptée pour se déplacer, pour passer d'une première configuration à une seconde configuration,
   - chaque trous microscopique résulte de la superposition des mêmes trous inrtermédiaires dans la seconde configuration que dans la première configuration, et
   - la taille des trous microscopiques dans la seconde configuration diffère de leur taille dans la première configuration.

2. ensemble modifiable suivant la revendication 1, dans lequel chacune dedites plaques est adaptée pour se déplacer, et dans lequel la position de chacune desdites plaques dans la seconde configuration diffère de sa position dans la première configuraton.

3. ensemble modifiable suivant une des revendications 1 à 2, le mouvement de chaque plaque par rapport à une autre étant suivant un seul axe.

4. ensemble modifiable suivant une des revendications 1 à 3, les plaques étant positionnées les unes par rapport aux autres par des rails de guidage microscopiques (1132 ; 1138).

5. ensemble modifiable suivant une des revendications 1 à 4, dans lequel les plaques sont séparées les unes des autres par une couche de liquide lubrifiant transparent.

6. ensemble modifiable suivant la revendication 5, dans lequel au moins une des plaques est une feuille fine (1041) portant des ouvertures intermédiaires, et dans lequel cette feuille fine est placée entre deux plaques épaisses (1043; 1052), pour éviter une déformation de la feuille

7. ensemble modifiable suivant une des revendications 1 à 5, comprenant exactement deux plaques mobiles, chaque ouverture intermédiaire (401) étant carrée.

8. ensemble modifiable suivant une des revendications 1 à 6, comprenant exactement trois plaques, chaque ouverture intermédiaire (1001) étant hexagonale.

9. ensemble modifiable suivant une des revendications 1 à 6, comprenant au moins trois plaques, et comprenant un mécanisme de diaphragme à iris (1020 - 1031) adapté pour déplacer les plaques.

**Claims**

1. modifiable assembly comprising a plurality of microscopic holes (1200) and adapted to filter a light beam in a confocal microscope, **characterized by** the following facts:

   - it comprises a plurality of plates (1000), wherein each plate comprises a plurality of intermediate holes (1001),
   - each microscopic hole is made up of superimposed intermediate holes from each of said plates,
   - each intermediate hole is part of at most one microscopic hole,
   - at least one of said plates is adapted to move, for switching from a first configuration to a second configuration,
   - in the second configuration each microscopic hole is made up of the superimposition of the same intermediate holes as in the first configuration, and
   - the size of the microscopic holes in the second configuration differs from their size in the first configuration.

2. modifiable assembly according to claim 1, wherein each of said plates is adapted to move, and wherein the position of each of said plates in the second configuration differs from its position in the first configuration.

3. modifiable assembly according to any of claims 1 or 2, wherein the movement of each plate relative to another is along a single axis.

4. modifiable assembly according to any of claims 1 to 3, the plates being positioned relative to each other by microscopic guide rails (1132; 1138).

5. modifiable assembly according to any of claims 1 to 4, wherein the plates are separated from each other by a layer of transparent lubricating oil.

6. modifiable assembly according to claim 5, at least one of the plates being a thin sheet (1041) carrying intermediate apertures, and said thin sheet being placed between two thick plates (1043; 1052) to avoid sheet distortion.

7. modifiable assembly according to any of claims 1 to 5, comprising exactly two movable plates, and wherein each intermediate aperture (401) is square.

8. modifiable assembly according to any of claims 1 to 6, comprising exactly three plates, and wherein each intermediate aperture (1001) is hexagonal.

9. modifiable assembly according to any of claims 1 to 6, comprising exactly three plates, and comprising an iris diaphragm mechanism (1020-1031) adapted to move the plates.

**Patentansprüche**

1. veränderliche Anordnung, welche eine Vielzahl von mikroskopischen Löchern (1200) umfasst und sich zum Filtern eines Lichtstrahlenbündels in einem Konfokalmikroskop eignet, **dadurch gekennzeichnet, dass:**

   - sie eine Vielzahl von Platten (1000) umfasst, die jeweils eine Vielzahl konstituierender Löcher (1001) enthalten,
   - jedes mikroskopische Loch resultiert aus der Überlagerung von konstituierenden Löchern jeder der genannten Platten,
   - jedes konstituierende Loch trägt zur Bildung höchstens eines mikroskopischen Lochs bei,
   - mindestens eine der genannten Platten sich verschieben lässt, sodass aus einer ersten Konfiguration eine zweite Konfiguration entsteht,
   - jedes mikroskopische Loch durch Überlagerung der jeweils gleichen konstituierenden Löcher in der ersten und der zweiten Konfiguration entsteht, und
   - sich die Größe der mikroskopischen Löcher in der zweiten Konfiguration von ihrer Größe in der ersten Konfiguration unterscheidet.

2. veränderliche Anordnung gemäß Patentanspruch 1, in der jede der genannten Platten sich verschieben lässt, und in der sich die Position jeder der genannten Platten in der zweiten Konfiguration von ihrer Position in der ersten Konfiguration unterscheidet.

3. veränderliche Anordnung gemäß einem der Patentansprüche 1 bis 2, wobei die Bewegung jeder Platte gegenüber einer anderen entlang einer einzigen Achse erfolgt.

4. veränderliche Anordnung gemäß einem der Patentansprüche 1 bis 3, wobei die Platten durch mikroskopische Führungsschienen (1132, 1138) zueinander positioniert werden.

5. veränderliche Anordnung gemäß einem der Patentansprüche 1 bis 4, in der die Platten durch eine Schicht eines transparenten flüssigen Gleitmittels voneinander getrennt sind.

6. veränderliche Anordnung gemäß Patentanspruch 5, in der mindestens eine der Platten eine dünne Folie (1041) ist, welche konstituierende Löcher trägt, und in der sich diese dünne Folie zwischen zwei dicken Platten (1043, 1052) befindet, um eine Verformung der Folie zu verhindern.

7. veränderliche Anordnung gemäß einem der Patentansprüche 1 bis 5, welche genau zwei bewegliche Platten umfasst, wobei jedes konstituierende Loch (401) quadratisch ist.

8. veränderliche Anordnung gemäß einem der Patentansprüche 1 bis 6, welche genau drei Platten umfasst, wobei jedes konstituierende Loch (1001) sechseckig ist.

9. veränderliche Anordnung gemäß einem der Patentansprüche 1 bis 6, welche mindestens drei Platten umfasst, und einen Irisblendenmechanismus (1020 - 1031) enthält, der sich zum Verschieben der Platten eignet.

Fig.1

Fig.2                              Fig.3

Fig.4

Fig.5

Fig.6

Fig.7

Fig.8

Fig.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0103860
- US 5978095 A
- US 5162941 A
- US 5239178 A
- US 6002509 A
- DE 1992958 C1
- US 5400170 A
- FR 0201222 W